# FASCICULE DE BREVET EUROPEEN

(11) **EP 2 879 480 B1**
(45) Date de publication et mention de la délivrance du brevet: **05.09.2018**
(21) Numéro de dépôt: 13745649.7
(22) Date de dépôt: 05.08.2013
(51) Int. Cl.: A01D 34/416

(54) **TETE DE COUPE POUR UN APPAREIL DE COUPE DE VEGETAUX**
SCHNEIDKOPF FÜR EINE VORRICHTUNG ZUM SCHNEIDEN VON PFLANZEN
CUTTING HEAD FOR AN IMPLEMENT FOR CUTTING VEGETATION

(30) Priorité: 03.08.2012 US 201261679576 P; 20.09.2012 FR 1258811; 14.03.2013 US 201361786129 P; 14.03.2013 FR 1352263
(43) Date de publication de la demande: 10.06.2015
(73) Titulaire: Speed France S.A.S., 69400 Arnas (FR)
(72) Inventeur: LEGRAND, Emmanuel, 01240 St. Germain sur Renon (FR)
(74) Mandataire: Regimbeau
(86) Numéro de dépôt international: PCT/EP2013/066346
(87) Numéro de publication internationale: WO 2014/020178

(56) Documents cités:
- EP-A1- 0 435 795
- WO-A2-2008/053508
- DE-A1-102007 007 987
- FR-A1- 2 559 343
- US-A- 4 024 635
- US-A- 5 657 542
- US-A- 5 675 897
- US-A1- 2002 026 714

## Description

### DOMAINE DE L'INVENTION

La présente invention concerne une tête de coupe pour un appareil de coupe de végétaux, tel qu'un coupe-bordures ou une débroussailleuse.

### ARRIERE PLAN DE L'INVENTION

Les fils de coupe de végétaux sont généralement réalisés par extrusion d'un matériau thermoplastique incluant notamment du polyamide et présentent des formes variées.

Alors que les fils les plus anciens présentaient une section circulaire et étaient lisses sur toute leur étendue, des fils présentant des sections variées ont été développés, afin d'améliorer la qualité de coupe (présence d'arêtes, etc.) et/ou la longévité du fil, et/ou diminuer le bruit de l'appareil en fonctionnement en jouant sur les turbulences.

On trouve ainsi des fils comportant des arêtes, des rainures, des gorges, ou encore de déformations locales du fil le long de son étendue.

Dans un souci de gain de place, les fils de coupe sont généralement stockés et commercialisés sous forme de bobines.

Or la rigidité des matériaux les constituant implique qu'ils ne peuvent d'eux-mêmes rester sous forme de bobines et que la bobine se défait donc si elle n'est pas retenue par un quelconque moyen de maintien.

Typiquement, les bobines de fil de coupe sont commercialisées dans des emballages de forme et de dimensions ajustées à la forme et aux dimensions de la bobine, de sorte que celle-ci soit maintenue en forme par les parois internes de la boîte.

Pour utiliser le fil dans un appareil de coupe, il est nécessaire de dévider une certaine longueur de fil et de l'enrouler sur le moyeu de la tête de coupe en laissant une portion nécessaire à la coupe sortir d'un orifice latéral de la tête de coupe.

Cette opération de mise en place du fil dans la tête de coupe est une opération fastidieuse.

Par ailleurs, en raison de sa rigidité, le fil est susceptible de se débobiner même une fois qu'il est en place dans la tête de coupe, rendant difficile la maîtrise de la longueur qui sort de la tête pour effectuer la coupe.

Pour remédier à ces inconvénients, des bobines autoporteuses, c'est-à-dire constituées de spires solidaires les unes des autres mais séparables par un effort de traction exercé sur l'extrémité libre du fil, ont été proposées.

Ainsi, le document US 4,024,635 propose une bobine autoporteuse dont les différentes spires sont rendues solidaires les unes des autres par soudure, par un adhésif, ou par l'injection de liens sécables entre deux spires adjacentes.

Le document FR 2 967 548 propose quant à lui un fil profilé comprenant des aménagements de retenue réciproque de sorte que, lorsque l'on enroule le fil sur lui-même, chaque spire coopère avec au moins une spire adjacente de manière à la retenir mécaniquement.

Ce fil permet donc notamment de former une bobine autoporteuse par exemple en forme de disque.

Pour utiliser la bobine autoporteuse directement dans un appareil de coupe, c'est-à-dire sans avoir à dévider la bobine puis à enrouler le fil de coupe sur le moyeu de la tête de coupe comme cela est nécessaire avec les bobines conventionnelles, le document US 4,024,635 précité propose une tête de coupe dans laquelle la bobine autoporteuse est emprisonnée entre une partie supérieure destinée à être solidarisée avec le dispositif d'entraînement en rotation de l'appareil, et une partie inférieure fixée de manière démontable sur la partie supérieure par un écrou central.

La bobine est centrée par rapport à la tête par son évidement central, qui est reçu par un plot cylindrique de révolution intégré à la partie supérieure de la tête de coupe, et enserrée entre les parties supérieure et inférieure et de la tête, dans une position telle que l'extrémité libre du fil sort par un orifice prévu dans ladite partie supérieure sur une longueur déterminée pour effectuer la coupe.

Lorsque le fil est usé, on sectionne la portion usagée et l'on dévide une nouvelle portion de fil.

A cet effet, il est nécessaire de desserrer l'écrou central pour écarter légèrement la partie supérieure et la partie inférieure de la tête de coupe puis l'on exerce un effort de traction sur le fil pour en dévider une partie.

Ensuite, on serre à nouveau l'écrou central pour assurer le maintien de la bobine entre la partie supérieure et la partie inférieure de la tête de coupe.

Bien que de conception simple, cette tête de coupe présente l'inconvénient de nécessiter un desserrage partiel des parties inférieure et supérieure de la tête de coupe à chaque fois qu'une nouvelle longueur de fil de coupe doit être rendue disponible.

Par ailleurs, cette tête ne permet qu'un dévidage manuel du fil, qui nécessite l'arrêt complet de l'appareil.

Or un certain nombre de têtes de coupe du marché sont pourvues d'un système dit « tap & go » qui permet, par un simple choc exercé sur le sol par la partie inférieure de la tête de coupe, de dévider automatiquement une longueur déterminée de fil, alors que l'appareil est en fonctionnement.

En raison de sa conception qui emprisonne la bobine entre les parties inférieure et supérieure, la tête de coupe décrite ci-dessus n'est pas compatible avec un tel système.

Un but de l'invention est donc de concevoir une tête de coupe qui permette d'utiliser directement une bobine autoporteuse, c'est-à-dire n'impliquant pas d'opérations de dévidage et de rembobinage du fil de coupe, et dans laquelle l'extraction d'une longueur de fil soit simplifiée.

De préférence, la conception de ladite tête de coupe doit être compatible avec le système de dévidage automatique « tap & go » mentionné ci-dessus.

Un autre but de l'invention est de proposer un ensemble de coupe comprenant une tête de coupe et une bobine autoporteuse spécifiquement adaptés l'un à l'autre.

### BREVE DESCRIPTION DE L'INVENTION

Conformément à l'invention, il est proposé une tête de coupe pour un appareil de coupe de végétaux, tel qu'un coupe-bordures ou une débroussailleuse, adaptée pour recevoir au moins une bobine autoporteuse constituée d'une pluralité de spires temporairement jointives d'au moins un fil de coupe et présentant un évidement central, lesdites spires étant solidaires les unes des autres mais séparables par un effort sur une extrémité libre du fil, ladite tête de coupe comprenant :
- un corps définissant un logement intérieur pour la bobine et pourvu d'un orifice périphérique pour la sortie d'une longueur de fil de coupe disjointe de la bobine, et apte à être entraîné en rotation par un moteur,
- un mandrin central adapté pour supporter ladite au moins une bobine, autoporteuse, ledit mandrin comprenant au moins un élément adapté pour coopérer avec la bobine (2) de sorte à assurer une solidarisation en rotation entre le mandrin et la bobine, le mandrin étant apte à sélectivement tourner par rapport au corps pour faire sortir une portion de fil au travers de l'orifice périphérique.
La bobine est aplatie en ce sens que l'ensemble des spires constituant la bobine s'étendent dans le plan généralement transversal à l'axe de rotation de la tête, ou encore par exemple selon un cône aplati coaxial avec ledit axe de rotation.

La bobine peut par ailleurs être constituée d'un unique fil enroulé sur lui-même pour former les spires jointives, ou bien d'au moins deux fils, liés longitudinalement de manière séparable de sorte à former une bande, comme décrit par exemple dans le document EP 0 435 795, la bande étant ensuite enroulée pour former les spires jointives.

La bobine est annulaire en ce sens les spires ne s'étendent pas, vers l'intérieur de la bobine, jusqu'au centre de celle-ci, mais préservent un évidement central.

Selon un mode de réalisation, ledit élément du mandrin comprend un logement pour maintenir une extrémité libre intérieure de la bobine.

Ledit logement peut s'étendre selon un diamètre du mandrin.

De préférence, ledit logement est ouvert à ses deux extrémités.

Selon un autre mode de réalisation, la surface périphérique du mandrin est pourvue de dents, de sorte à procurer une solidarisation par friction des dents avec la bobine.

Selon une variante, la surface périphérique du mandrin est pourvue d'une pluralité de nervures inscrites dans un cône, de sorte à procurer une solidarisation par friction des nervures avec la bobine.

De manière particulièrement avantageuse, la tête de coupe comprend en outre une plaque support s'étendant radialement à partir du mandrin et une plaque de pression opposée à ladite plaque support et adaptée pour exercer une pression sur ladite au moins une bobine lorsque ladite bobine est en place sur le mandrin.

Selon une autre forme d'exécution de l'invention, ledit élément du mandrin comprend une forme non circulaire complémentaire de l'évidement central de la bobine.

De préférence, le mandrin présente en direction circonférentielle un épaulement apte à venir en appui contre une extrémité libre intérieure de la bobine.

La section du mandrin dans un plan perpendiculaire à son axe de rotation peut ainsi présenter la forme du contour d'une spirale, le segment radial reliant les deux tours externes de ladite spirale correspondant à la surface d'appui pour l'extrémité interne du fil.

Selon une forme d'exécution, le logement est adapté pour recevoir une bobine constituée d'une pluralité de spires temporairement jointives d'au moins deux fils de coupe liés longitudinalement de manière séparable, et le corps comprend autant d'orifices de sortie que de fils.

Selon une forme d'exécution, le logement est adapté pour recevoir au moins deux bobines empilées sur le mandrin central et la tête comprend autant d'orifices de sortie que de fils contenus dans l'ensemble des bobines.

De préférence, les orifices de sortie des fils sont circonférentiellement régulièrement répartis.

Par ailleurs, la tête comprend avantageusement un dispositif d'entraînement du mandrin.

Selon un mode de réalisation, le dispositif d'entraînement du mandrin comprend un organe d'entraînement par action manuelle.

Selon un autre mode de réalisation (« tap & go »), le dispositif d'entraînement du mandrin comprend un plot solidaire du mandrin, agencé à l'extérieur du corps à l'encontre de la force de rappel d'un élément élastique, ledit plot étant mobile en coulissement selon l'axe de rotation du mandrin entre une position où le mandrin est bloqué par rapport au corps et une position où le mandrin est mobile en rotation par rapport au corps.

De manière optionnelle, la tête comprend un dispositif de blocage du fil à l'orifice de sortie.

Ledit dispositif de blocage comprend avantageusement un ergot pivotable entre une position de libération du fil lorsque la tête de coupe est immobile et une position de blocage du fil sous l'effet de la force centrifuge lorsque la tête de coupe est entraînée en rotation par le moteur.

Enfin, de préférence, la tête comprend en outre un couvercle articulé sur le corps par une charnière pour fermer le logement de la bobine.

Un autre objet concerne un ensemble de coupe pour un appareil de coupe de végétaux, tel qu'un coupe-bordures ou une débroussailleuse, ledit ensemble comprenant une tête de coupe telle que décrite ci-dessus et au moins une bobine constituée d'une pluralité de spires temporairement jointives d'au moins un fil de coupe et présentant un évidement central.

Selon un mode de réalisation, ladite bobine est constituée d'une pluralité de spires temporairement jointives d'au moins deux fils de coupe liés longitudinalement de manière séparable.

Selon un mode de réalisation, les spires de la bobine sont rendues temporairement jointives par des aménagements de retenue réciproque formés sur le fil, de sorte que chaque spire retienne mécaniquement une spire adjacente.

De manière alternative ou complémentaire, les spires de la bobine sont rendues temporairement jointives par adhésion, par exemple par un adhésif rapporté.

De manière alternative ou complémentaire, les spires sont rendues temporairement jointives par fusion contrôlée partielle de la matière du fil.

Selon un mode de réalisation, l'ensemble de coupe comprend au moins deux bobines empilées sur le mandrin.

Dans ce cas, les bobines sont empilées de sorte à présenter le même sens d'enroulement.

### BREVE DESCRIPTION DES DESSINS

D'autres caractéristiques et avantages de l'invention ressortiront de la description détaillée qui va suivre, en référence aux dessins annexés sur lesquels :
- la figure 1 est une vue en perspective d'une partie du corps d'une tête de coupe selon un mode de réalisation de l'invention, dans lequel une bobine est logée,
- la figure 2 est une vue de dessus d'un mode de réalisation d'une bobine pouvant être utilisée dans ladite tête de coupe,
- la figure 3 est une vue en perspective d'un mode de réalisation d'une bobine pouvant être utilisée dans ladite tête de coupe,
- la figure 4 est une vue d'ensemble d'un mode de réalisation de la tête de coupe,
- la figure 5 est une vue intérieure d'une tête de coupe assemblée selon un mode de réalisation,
- la figure 6 est une vue éclatée du corps de la tête de coupe comprenant le dispositif « tap & go »,
- la figure 7 est une vue de côté du corps de la tête de coupe comprenant le dispositif « tap & go »,
- - la figure 8 est une vue en perspective du mandrin,
- la figure 9 est une vue de détail du mandrin en position de blocage en rotation par rapport au corps,
- la figure 10 est une vue de détail du mandrin en position de rotation par rapport au corps,
- la figure 11 est une vue en coupe d'un mode de réalisation de la tête de coupe,
- la figure 12 est une vue en coupe du mandrin selon un mode de réalisation de l'invention,
- la figure 13 est une vue intérieure d'une tête de coupe assemblée selon un deuxième mode de réalisation de l'invention,
- la figure 14 est une vue intérieure d'une tête de coupe, sans la bobine, selon un troisième mode de réalisation de l'invention,
- la figure 15 est une vue intérieure d'une tête de coupe, sans la bobine, selon un quatrième mode de réalisation de l'invention,
- la figure 16 est une vue en coupe d'une tête de coupe selon l'un des deuxième, troisième ou quatrième modes de réalisation,
- la figure 17 est une vue éclatée d'une tête de coupe selon l'un des deuxième, troisième ou quatrième modes de réalisation.

### DESCRIPTION DETAILLEE DE MODES DE REALISATION DE L'INVENTION

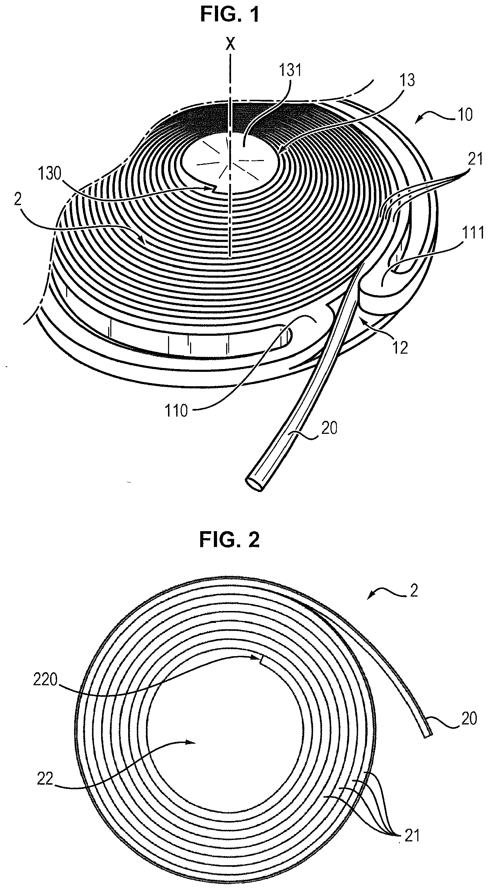

La figure 1 illustre une partie du corps 10 de la tête de coupe selon un premier mode de réalisation, à l'intérieur de laquelle une bobine 2 est agencée.

Ladite bobine 2 est constituée d'une pluralité de spires 21 temporairement jointives d'au moins un fil de coupe 20 et présentant un évidement central 22.

Dans le mode de réalisation illustré sur cette figure, le fil présente une section circulaire mais il est entendu que, comme exposé ci-dessous, le fil peut présenter d'autres sections.

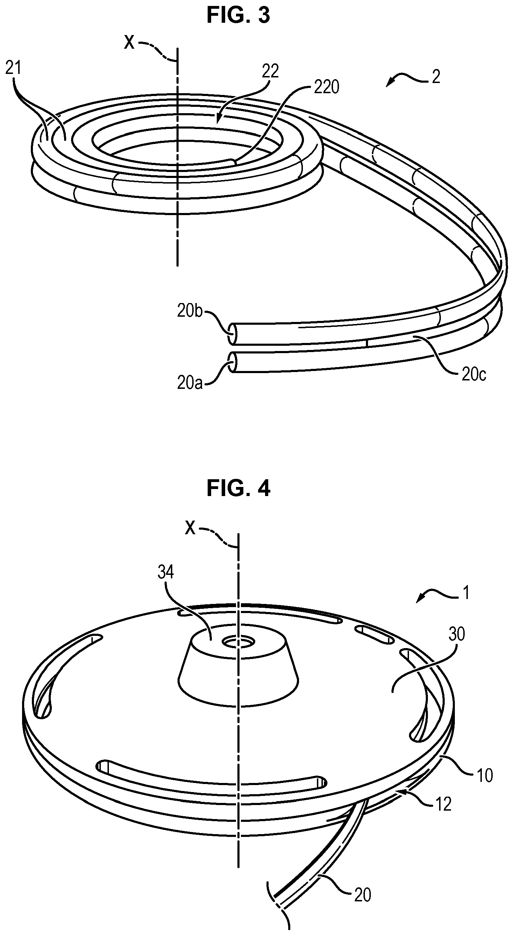

Différents modes de réalisation d'une telle bobine sont présentés sur les figures 2 et 3.

La figure 2 illustre une bobine constituée d'un unique fil 20, qui est enroulé de sorte à former des spires jointives 21.

Une première extrémité 220 du fil se trouve dans l'évidement intérieur 22 de la bobine, tandis que la seconde extrémité est une extrémité libre destinée à sortir de la tête de coupe.

Les spires s'étendent typiquement dans un même plan.

Dans ce mode de réalisation, la jonction temporaire des différentes spires est réalisée par des aménagements de retenue réciproque formés sur le fil, de sorte que chaque spire retienne mécaniquement une spire adjacente.

Ces aménagements de retenue réciproque sont décrits dans le document FR 2 967 548 auquel on pourra se référer.

Naturellement, une telle bobine peut également être réalisée en joignant temporairement les fils par d'autres moyens que des aménagements de retenue mécanique.

Ainsi, les spires peuvent être rendues temporairement jointives par adhésion (par exemple au moyen d'un adhésif chimique ou thermique déposé, de manière continue ou discontinue) entre les spires ; par fusion localisée partielle de la matière du fil entre deux spires adjacentes ; par soudage par ultrasons ou par friction.

Tout autre moyen de jonction temporaire, c'est-à-dire qui permettre de maintenir puis de séparer les spires sans endommager le fil, pourra être utilisé sans pour autant sortir du cadre de la présente invention.

La figure 3 illustre une bobine constituée de deux fils 20a, 20b liés temporairement de manière séparable, lesdits fils formant ensemble une sorte de bande qui est enroulée sur elle-même pour former des spires 21 temporairement jointives.

La liaison entre les deux fils 20a, 20b est par exemple obtenue par extrusion d'un film 20c du même matériau que les fils lors de la fabrication de ladite bande.

On pourra se référer à cet égard au document EP 0 435 795.

Ledit film 20c est suffisamment fin pour être déchiré en vue de séparer les fils 20a, 20b sur une certaine longueur.

Par ailleurs, les spires 21 sont rendues temporairement jointives par l'un des moyens décrits plus haut en référence à la figure 2.

En d'autres termes, la bobine comprend deux jonctions temporaires : l'une entre les deux fils 20a, 20b, sur la longueur de ceux-ci ; l'autre entre les spires adjacentes.

La figure 4 est une vue d'ensemble de la tête de coupe, sur laquelle on observe un couvercle 30 assemblé sur le corps 10.

Le couvercle 30 présente un bossage 34 par lequel il est apte à être solidarisé à un appareil de coupe et entrainé en rotation par le moteur dudit appareil.

Les appareils de coupe et les moyens de fixation d'une tête de coupe à de tels appareils sont connus en eux-mêmes et ne seront pas décrits en détail ici.

De manière avantageuse, la tête de coupe est apte à être montée sur des appareils provenant de différents fabricants.

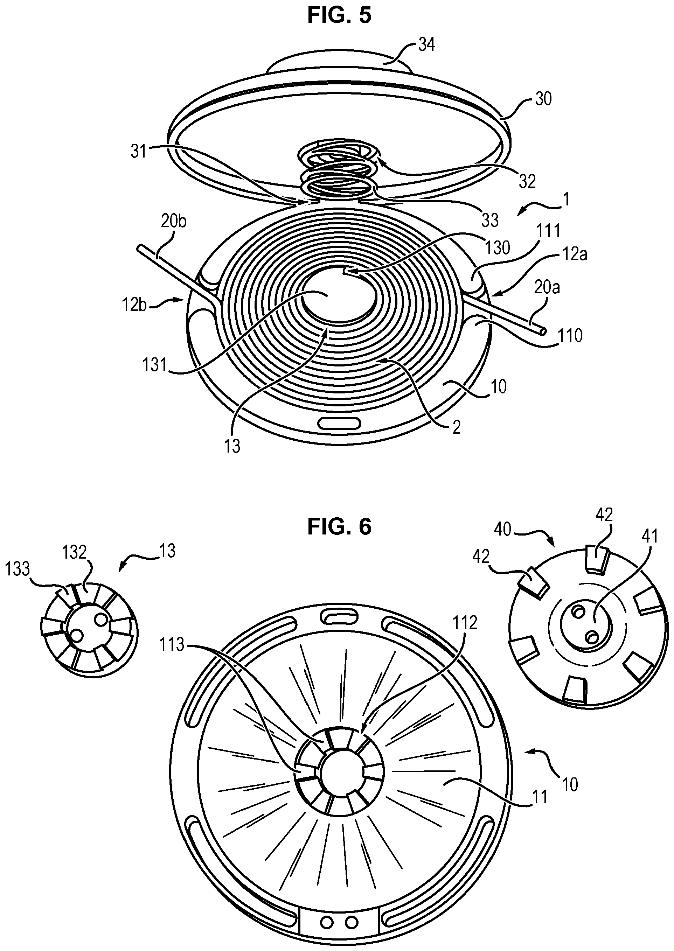

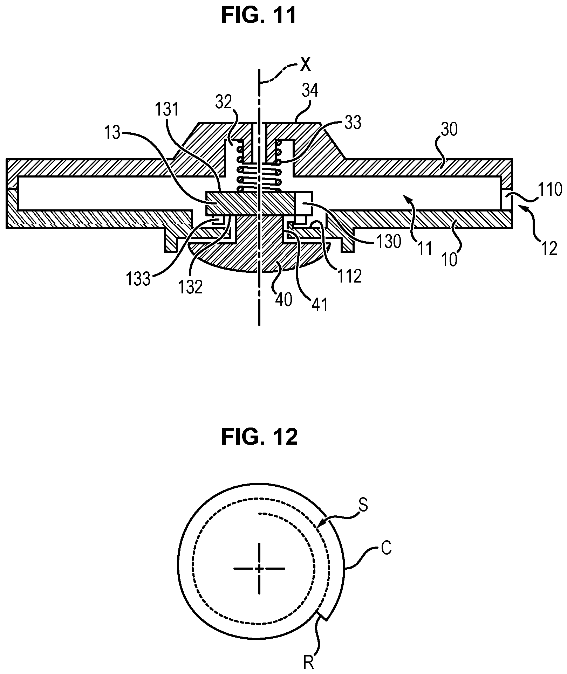

La figure 5 illustre une vue d'ensemble d'une tête de coupe selon le premier mode de réalisation en position ouverte ; la figure 11 est une vue en coupe de ladite tête de coupe, vide, en position fermée.

La bobine 2 est placée dans un logement 11 présentant une forme et une dimension sensiblement identiques à celle de la bobine 2.

Ledit logement se présente généralement sous la forme d'une cavité cylindrique agencée à l'intérieur du corps 10.

Le corps 10 comprend par ailleurs au moins un orifice 12 qui débouche dans le logement de la bobine afin de permettre la sortie d'une longueur de fil de coupe 20 disjointe de la bobine.

Par exemple, les parois intérieure et extérieure du logement présentent, de part et d'autre de l'orifice 12, une extrémité 110, 111 arrondie faisant fonction de surface d'appui du fil pendant la rotation de la tête de coupe, ce qui limite les risques de casse à l'oeillet, c'est-à-dire de rupture du fil 20 au niveau de l'orifice 12.

La bobine 2 est reçue dans le logement 11 sur un mandrin central 13 présentant une forme complémentaire de l'évidement central 22 de la bobine.

Ledit mandrin 13 est par ailleurs agencé de sorte à tourner sélectivement par rapport au corps 10, l'axe de rotation du mandrin étant désigné par le repère X.

Par sélectivement, on entend qu'en fonctionnement normal de la tête de coupe, c'est-à-dire lorsqu'elle est entraînée en rotation par le moteur de l'appareil de coupe en vue de couper des végétaux, le mandrin 13 est fixe par rapport au corps 10, et qu'il n'est amené à tourner par rapport au corps 10 que par une action d'un utilisateur.

Contrairement aux mandrins utilisés dans les têtes de coupe conventionnelles, qui présentent une forme circulaire, le mandrin 13 présente une forme non circulaire.

Grâce à cette forme non circulaire, la bobine peut être solidarisée au mandrin lors d'une rotation de celui-ci, par coopération des formes de la bobine et du mandrin.

De manière particulièrement avantageuse, le mandrin présente un épaulement 130 en direction circonférentielle.

Ledit épaulement 130 forme une surface d'appui pour l'extrémité libre intérieure de la bobine, c'est-à-dire l'extrémité 220 du fil opposée à l'extrémité libre sortant de la tête.

La largeur de l'épaulement, dans la direction radiale, est sensiblement égale à la largeur du fil dans la même direction.

La figure 12 est une vue en coupe d'un mode de réalisation préféré du mandrin 13 dans un plan perpendiculaire à son axe X de rotation.

La section du mandrin a la forme du contour C d'une spirale S, dont quelques spires intérieures ont été représentées en pointillés. Le segment radial R reliant les deux tours externes de ladite spirale correspond à l'épaulement 130 pour l'extrémité du fil située à l'intérieur de la bobine, et la longueur de ce segment R est sensiblement égale à la largeur d'une spire.

La section du mandrin est ainsi complémentaire de celle de l'évidement central 22 de la bobine.

Par ailleurs, la hauteur du mandrin 13 (c'est-à-dire selon la direction X) ainsi que la profondeur du logement, peuvent être adaptés pour recevoir une ou plusieurs bobines empilées.

De manière particulièrement avantageuse, le couvercle 30 et le corps 10 sont reliés par une charnière 31, de sorte que l'ouverture et la fermeture de la tête de coupe pour mettre en place une nouvelle bobine sont particulièrement aisées et rapides.

Ceci n'exclut pas que le couvercle et le corps puissent être assemblés par tout autre moyen, par exemple des vis réparties sur leur périphérie.

Dans le mode de la réalisation illustré sur la figure 5, on observe deux fils 20a, 20b, qui sortent chacun d'un orifice 12a, 12b.

Les deux fils 20a, 20b peuvent soit appartenir à deux bobines empilées du type de celle illustrée à la figure 2, soir d'une bobine constituée de deux fils, tel qu'illustrée à la figure 3.

Les orifices 12a, 12b sont de préférence régulièrement répartis circonférentiellement ; par exemple, si les orifices sont au nombre de deux, ils sont avantageusement diamétralement opposés.

Naturellement, si davantage de fils doivent être utilisés dans la tête de coupe, on prévoira un nombre adéquat d'orifices.

Par ailleurs, tous les orifices ne sont pas nécessairement agencés sur le corps 10 comme illustré sur la figure 5 ; les orifices peuvent en effet être distribués à la fois sur le couvercle et sur le corps, par exemple.

De manière optionnelle (non illustrée), la tête de coupe est pourvue d'un dispositif de blocage du fil au niveau de l'orifice.

Ce dispositif peut comprendre un ergot pivotable entre une position de libération du fil lorsque la tête est immobile et une position de blocage du fil sous l'effet de la force centrifuge lorsque la tête est entraînée en rotation par le moteur.

Un tel dispositif peut s'avérer utile pour éviter que les spires ne glissent les unes le long des autres sous l'effet de la force centrifuge, au cas où, par exemple, les spires ne sont pas solidarisées suffisamment fermement compte tenu de la force appliquée.

En effet, en bloquant le fil au niveau de l'orifice, on évite que la force centrifuge ne déforme les spires à l'intérieur de la tête.

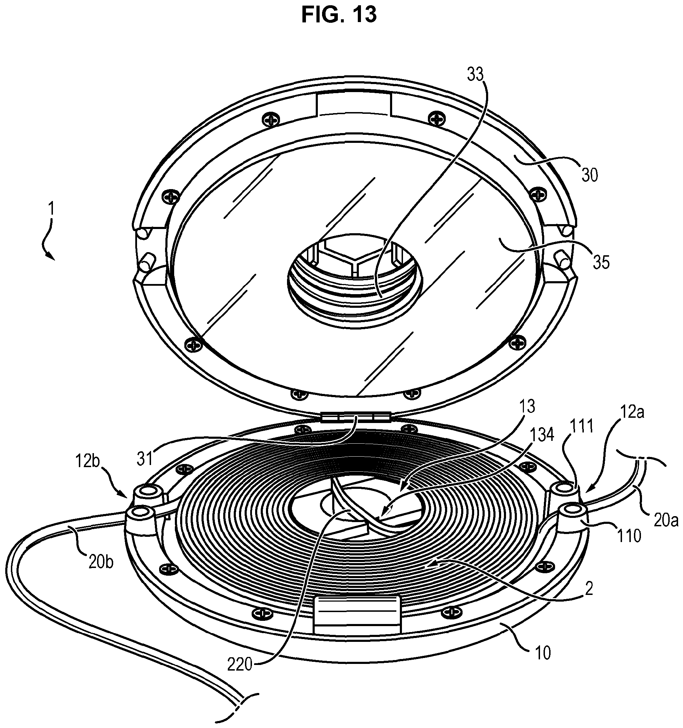

Un deuxième mode de réalisation de l'invention est illustré à la figure 13.

Sauf indication contraire, les pièces désignées par le même signe de référence que sur les figures 1 à 12 sont similaires aux pièces décrites précédemment et ne seront donc pas décrites en détail à nouveau.

La figure 13 présente une vue intérieure de la tête de coupe 1 dans laquelle une bobine 2 a été insérée.

Dans l'exemple présenté ici, la bobine 2 est du type illustré à la figure 3, c'est-à-dire qu'elle comprend deux filaments 20a, 20b liés temporairement de manière séparable.

De manière alternative, la bobine peut consister en un unique filament et/ou différentes bobines peuvent être superposées.

Le corps 10 comprend deux orifices 12a, 12b pour les filaments 20a et 20b respectivement.

Dans ce mode de réalisation, le mandrin 13 ne présente pas une forme complémentaire de l'évidement central 22 de la bobine 2.

En revanche, le mandrin 13 comprend un logement 134 pour maintenir l'extrémité libre intérieure 220 de la bobine 2.

De préférence, ce logement 134, qui se présente sous la forme générale d'une rainure s'étendant dans un plan perpendiculaire à l'axe de rotation du mandrin, présente une dimension adaptée à la dimension du filament de sorte que le filament soit inséré en force dans le logement, le logement exerçant ainsi une action de maintien du filament.

Cet élément permet d'améliorer le maintien du filament par le mandrin et une meilleure solidarisation en rotation du mandrin 13 avec la bobine 12.

Le logement 134 peut s'étendre selon un diamètre du mandrin.

De préférence, le logement 134 est ouvert à ses deux extrémités, de sorte qu'un filament soit introduit par l'une des extrémités et débouche de l'autre extrémité, comme illustré sur la figure 13.

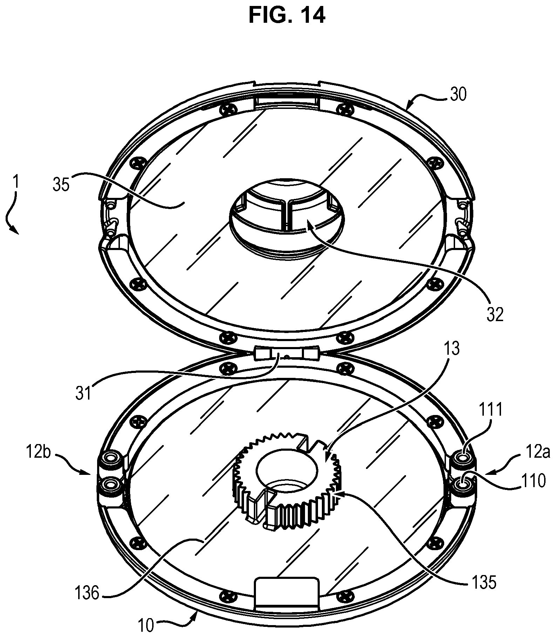

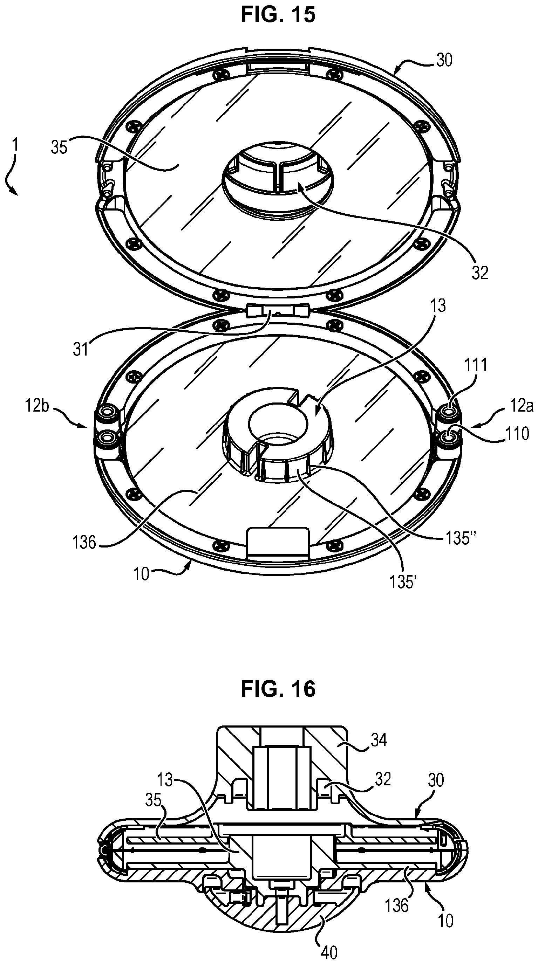

Les figures 14 et 15 présentent respectivement un troisième et un quatrième modes de réalisation de l'invention.

Dans ces modes de réalisation, le mandrin présente des formes alternatives pour procurer une solidarisation de la bobine sur le mandrin par friction.

Comme illustré sur la figure 14, le mandrin peut présenter une surface périphérique dentée 135.

Les dents s'étendent dans une direction parallèle à l'axe de rotation du mandrin 13.

Ces dents coopèrent avec la portion du filament délimitant l'évidement intérieur 22 de la bobine et maintiennent la bobine sur le mandrin par friction.

Comme illustré sur la figure 15, le mandrin peut avoir une surface périphérique 135' pourvue d'une pluralité de nervures 135" s'étendant radialement et inscrites dans un cône dont l'axe est confondu avec l'axe de rotation du mandrin, qui sont conçues de sorte que la bobine soit engagée en force sur le mandrin par friction sur les nervures.

De cette manière, la surface périphérique 135 (respectivement 135', 135") procure un contact plus intime entre le mandrin et la bobine que les mandrins cylindriques connus et par conséquent permet une solidarisation en rotation de la bobine et du mandrin.

Par ailleurs, dans chacun des deuxième, troisième et quatrième modes de réalisation, le mandrin 13 comprend une plaque support 136 qui s'étend radialement à partir de la surface périphérique 135 et qui supporte la bobine.

Dans ce cas, le logement 11 n'est pas seulement défini par le corps 10 lui-même mais aussi par la plaque support 136.

Compte tenu des contraintes liées au fonctionnement de la tête de coupe, le mandrin et la plaque support sont avantageusement métalliques.

De préférence, la plaque support 136 n'est pas lisse mais présente au contraire un état de surface comprenant des aspérités permettant d'éviter le glissement de la bobine.

Par exemple, cet état de surface peut consister en une rugosité importante de la plaque support 136, ou en des picots régulièrement répartis.

De manière alternative ou complémentaire, la plaque support 136 peut être percée d'une pluralité de trous circulaires, répartis selon un ou plusieurs cercles concentriques autour de l'axe de rotation du mandrin 13.

En effet, lors du perçage de la plaque support 136, le métal qui est repoussé forme autour de chaque trou des aspérités qui dépassent de la surface de la plaque 136 et qui exercent une fonction de retenue de la bobine.

On peut ainsi percer la plaque support 136 d'une première série de trous répartis selon un premier cercle proche du mandrin 13, et d'une seconde série de trous répartis selon un second cercle proche de la périphérie de la plaque 136.

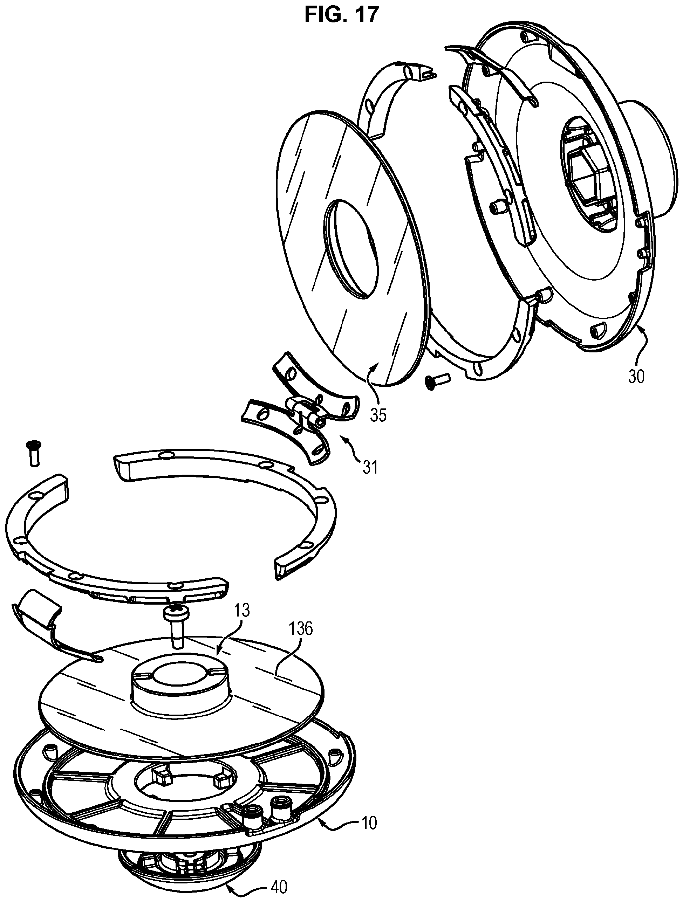

Selon un mode de réalisation avantageux, illustré sur les figures 13-17, la tête de coupe comprend en outre une plaque de pression 35 agencée dans le couvercle 30 à l'encontre du ressort 33 qui est décrit plus bas, à l'opposé de la plaque support 136.

Par exemple, la plaque de pression 35 peut être solidaire du ressort 33.

Cette plaque de pression 35 est destinée à être en contact avec la bobine et, sous l'effet de la force du ressort 33, exercer une pression sur la bobine lorsque celle-ci est en position d'utilisation dans la tête.

Ceci permet de maintenir la bobine plate entre la plaque support 136 et la plaque de pression 35, ce qui à son tour génère une meilleure solidarisation en rotation de la bobine et du mandrin et permet de s'affranchir de tout dispositif de blocage du fil au niveau de l'orifice.

### Mise en place d'une bobine dans la tête de coupe

La mise en place d'une bobine dans la tête de coupe est une opération particulièrement aisée puisqu'il suffit d'ouvrir la tête, de mettre en place la bobine dans le logement 11 de telle sorte que l'extrémité libre intérieure 220 de la bobine vienne en appui contre l'épaulement 130 du mandrin, de faire sortir une longueur de fil à travers l'orifice 12, puis à refermer la tête.

Lorsque l'on utilise une bobine constituée de deux ou plusieurs fils telle que celle illustrée sur la figure 3, on sépare les fils sur la longueur souhaitée et l'on fait sortir chacun des fils ainsi séparés par chacun des orifices prévus à cet effet dans la tête de coupe.

Lorsque l'on souhaite effectuer une coupe au moyen de plusieurs fils, il est également possible d'empiler plusieurs bobines constituées chacune d'un fil, les sens d'enroulement desdites bobines étant identiques, et de faire sortir une longueur de chaque fil à travers chacun des orifices de la tête de coupe.

Dans ce cas, il est préférable d'intercaler une plaque séparatrice (non représentée) entre deux bobines adjacentes afin d'éviter toute friction entre les filaments des bobines qui pourraient générer leur fusion.

Cette plaque séparatrice peut par exemple être perforée.

A cet égard, l'utilisation d'une bobine consistant en deux ou plusieurs filaments est avantageuse puisqu'une telle plaque séparatrice n'est alors pas nécessaire.

Il est également possible de combiner les deux modes de réalisation précédents en empilant par exemple deux bobines constituées chacune de deux fils séparables.

Dans les deuxième, troisième et quatrième modes de réalisation illustrés sur les figures 13 à 17, la mise en place d'une bobine dans la tête de coupe est également très facile.

Dans le cas du deuxième mode de réalisation (figure 13), l'utilisateur ouvre la tête, place la bobine sur la plaque support 136 autour du mandrin 13 et insère l'extrémité libre 220 de chaque filament dans le logement 134 du mandrin, fait sortir une longueur de fil à travers l'orifice 12a, 12b et referme la tête.

### Dévidement d'une longueur de fil (mode manuel)

Selon une première forme d'exécution, le mandrin 13 est actionné manuellement par l'utilisateur, alors que le moteur d'entraînement de la tête de coupe est arrêté.

A cet effet, le mandrin est solidarisé, du côté extérieur du corps 10, à un dispositif d'entraînement actionnable manuellement.

Ainsi, par exemple, le dispositif d'entraînement peut comprendre un organe tel qu'un écrou agencé à l'extérieur du corps et dont la rotation entraîne la rotation du mandrin et de la bobine et permet ainsi la sortie d'une longueur de fil.

### Dévidement d'une longueur de fil (mode « tap & go »)

Selon une seconde forme d'exécution, le mandrin 13 est actionné par un dispositif de type « tap & go », qui permet un dévidement automatique du fil par l'action d'un utilisateur.

On désigne par face supérieure la face 131 du mandrin orientée vers le couvercle 30 de la tête de coupe et par face inférieure la face 132 opposée, qui est orientée vers le fond du logement 11 du corps 10.

Le mandrin 13 est solidaire, par sa face inférieure 132, d'un plot 40 qui est agencé à l'extérieur du corps, sur la face opposée au fond du logement 11.

Le plot 40 (« bumper » selon la terminologie anglo-saxonne) se présente typiquement sous la forme d'une pièce circulaire présentant une surface extérieure arrondie, qui est destinée à être appuyée contre le sol lors de la mise en oeuvre du dispositif « tap & go ».

La figure 6 est une vue éclatée de ces différents composants.

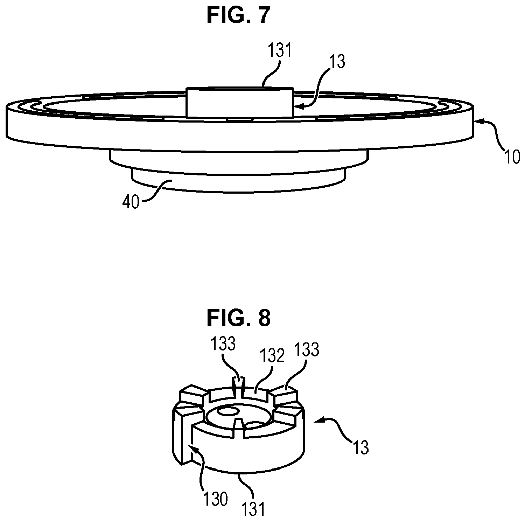

La figure 7 est une vue de côté de ces composants assemblés.

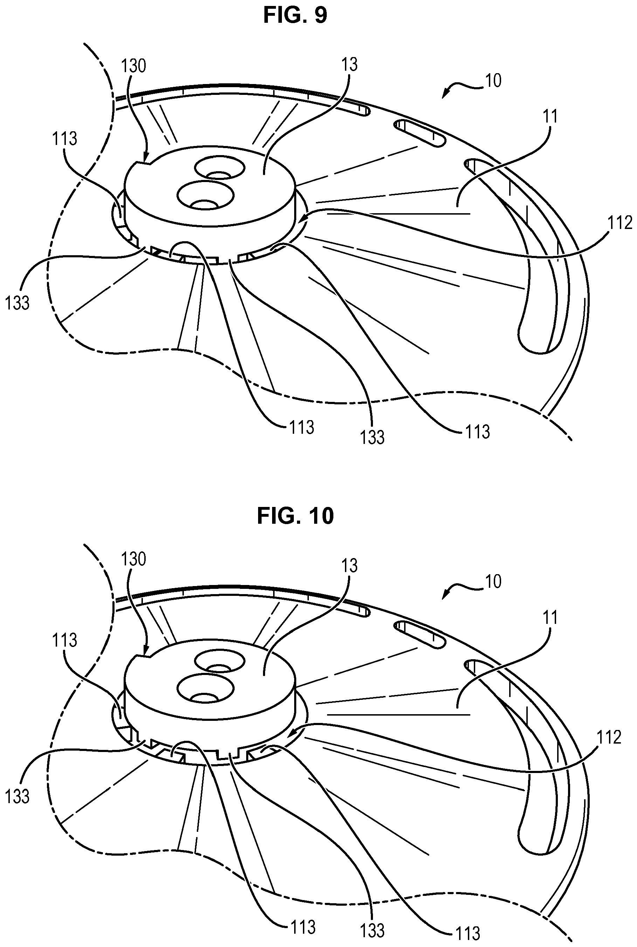

Le plot 40 comprend un axe cylindrique 41 par l'intermédiaire duquel il est apte à solidarisé à la face inférieure du mandrin 13, par exemple au moyen de vis (cf. figure 10).

Les dimensions selon l'axe X du mandrin 13 et du plot 40 sont choisies de telle sorte qu'une fois assemblés de part et d'autre du fond du logement 11, le mandrin 13 et le plot 40 forment ensemble un élément rigide mobile en coulissement par rapport audit logement 11 dans la direction X.

Par ailleurs, le mandrin 13 et le logement 11 comprennent respectivement des crans 133 (cf. figure 8) et une gorge crantée 112 (cf. figure 6), agencés selon deux couronnes qui sont en vis-à-vis l'une de l'autre lorsque le mandrin 13 est mis en place dans le logement 11.

La tête de coupe comprend en outre un élément élastique, par exemple, un ressort 33, agencé dans un logement central 32 du couvercle 30 et présentant des dimensions légèrement inférieures à celles du mandrin 13 de sorte à pouvoir s'appuyer sur la face supérieure 131 de celui-ci (cf. figure 5).

La distance entre le mandrin 13 et le fond du logement 32 du ressort, et la longueur du ressort 33, sont choisies pour que, lorsque le couvercle et le corps de la tête de coupe sont assemblés, le ressort 33 exerce un effort de pression du mandrin 13 vers le fond du logement 11, de sorte que les crans 133 du mandrin 13 soient logés dans la gorge crantée 112 du corps 10.

Dans cette position, la face supérieure du plot 40 est distante de la face extérieure du corps 10.

En fonctionnement normal de la tête de coupe, le mandrin 13 est donc bloqué en rotation vis-à-vis du corps 10 par les crans 113 ménagés dans ladite gorge 112 (cf. figure 9).

Pour dévider une nouvelle longueur de fil de coupe, l'utilisateur exerce une pression sur le plot 40 de la tête de coupe, en le heurtant contre le sol.

Cette opération est généralement mise en oeuvre alors que le moteur d'entraînement de la tête de coupe est en fonctionnement à vitesse normale.

Le déplacement du plot 40 vers le corps 10 dans la direction X entraîne le déplacement du mandrin 13 dont il est solidaire dans la direction du couvercle, à l'encontre de la force de pression exercée par le ressort 33.

Ainsi, les crans 133 du mandrin 13 sortent de la gorge crantée 112 du corps et ne sont donc plus bloqués en rotation par les crans 113 (cf. figure 10).

Sous l'effet de la force centrifuge, le mandrin 13 tourne, entraînant la bobine 2, et une longueur de fil se dévide automatiquement à travers l'orifice de sortie 12.

Après un certain déplacement angulaire de l'ensemble constitué du mandrin 13 et du plot 40, les crans 42 du plot 40 (cf. figure 10) viennent buter sur des crans (non illustrés) prévus dans une gorge complémentaire du corps 10, ce qui a pour effet de stopper la rotation du mandrin et le dévidement du fil.

Le ressort 33 a alors pour effet de repousser le mandrin 13 dans la gorge crantée 112 et d'empêcher la rotation du mandrin 13 par rapport au corps 10 en mettant en butée les crans 133 contre les crans 113.

L'utilisateur heurte le plot 40 contre le sol autant de fois que nécessaire pour dévider hors de la tête la longueur de fil souhaitée.

Les modes de réalisation illustrés sur les figures 13 à 17 comprennent également un dispositif de type « tap & go » similaire au dispositif ci-dessus.

Cependant, la tête de coupe selon les deuxième, troisième et quatrième modes de réalisation pourrait également être adaptée pour mettre en oeuvre une méthode manuelle telle que décrite plus haut.

## Revendications

1. Tête de coupe (1) pour un appareil de coupe de végétaux, tel qu'un coupe-bordures ou une débroussailleuse, adaptée pour recevoir au moins une bobine autoporteuse (2) constituée d'une pluralité de spires (21) temporairement jointives d'au moins un fil de coupe (20) et présentant un évidement central (22), lesdites spires étant solidaires les unes des autres mais séparables par un effort de traction sur une extrémité libre du fil, ladite tête de coupe comprenant :
un corps (10) définissant un logement intérieur (11) pour la bobine (2) et pourvu d'un orifice périphérique (12) pour la sortie d'une longueur de fil de coupe disjointe de la bobine, et apte à être entraîné en rotation par un moteur,
un mandrin central (13) adapté pour supporter ladite au moins une bobine autoporteuse,
ladite tête de coupe étant **caractérisée en ce que** ledit mandrin (13) comprend au moins un élément adapté pour coopérer avec la bobine (2) de sorte à assurer une solidarisation en rotation entre le mandrin (13) et la bobine (2), et **en ce que** le mandrin (13) est apte à sélectivement tourner par rapport au corps (10) pour faire sortir une portion de fil (20) au travers de l'orifice (12) périphérique.

2. Tête de coupe selon la revendication 1, **caractérisée en ce que** ledit élément du mandrin (13) adapté pour coopérer avec la bobine comprend un logement (134) pour maintenir une extrémité libre intérieure (220) de la bobine (2).

3. Tête de coupe selon la revendication 2, **caractérisée en ce que** ledit logement (134) s'étend selon un diamètre du mandrin (13).

4. Tête de coupe selon la revendication 3, **caractérisée en ce que** ledit logement (134) est ouvert à ses deux extrémités.

5. Tête de coupe selon la revendication 1, **caractérisée en ce que** ledit élément du mandrin (13) adapté pour coopérer avec la bobine est une surface périphérique du mandrin pourvue de dents (135) de sorte à procurer une solidarisation par friction des dents avec la bobine (2).

6. Tête de coupe selon la revendication 1, **caractérisée en ce que** ledit élément du mandrin (13) adapté pour coopérer avec la bobine est une surface périphérique (135') du mandrin pourvue d'une pluralité de nervures (135") inscrites dans un cône de sorte à procurer une solidarisation par friction des nervures avec la bobine (2).

7. Tête de coupe selon l'une des revendications 2 à 6, **caractérisée en ce qu'**elle comprend en outre une plaque support (136) s'étendant radialement à partir du mandrin (13) et solidaire dudit mandrin et une plaque de pression (35) opposée à ladite plaque support (136) et adaptée pour une pression sur ladite au moins une bobine (2) lorsque ladite bobine est en place sur le mandrin.

8. Tête de coupe selon la revendication 1, **caractérisée en ce que** ledit élément du mandrin (13) adapté pour coopérer avec la bobine (2) comprend une forme non circulaire complémentaire de l'évidement central (22) de la bobine.

9. Tête de coupe selon la revendication 8, **caractérisée en ce que** le mandrin (13) présente en direction circonférentielle un épaulement (130) apte à venir en appui contre une extrémité libre intérieure (220) de la bobine (2).

10. Tête de coupe selon l'une des revendications 1 à 9, **caractérisée en ce que** le logement (11) est adapté pour recevoir une bobine (2) constituée d'une pluralité de spires (21) temporairement jointives d'au moins deux fils de coupe (20a, 20b) liés longitudinalement de manière séparable, et **en ce que** la tête (1) comprend autant d'orifices de sortie (12a, 12b) que de fils (20a, 20b).

11. Tête de coupe selon l'une des revendications 1 à 9, **caractérisée en ce que** le logement (11) est adapté pour recevoir au moins deux bobines (2) empilées sur le mandrin central (13) et **en ce que** la tête (1) comprend autant d'orifices de sortie (12a, 12b) que de fils.

12. Tête de coupe selon l'une des revendications 10 ou 11, **caractérisée en ce que** les orifices de sortie (12a, 12b) des fils sont circonférentiellement régulièrement répartis.

13. Tête de coupe selon l'une des revendications 1 à 12, **caractérisé en ce qu'**elle comprend un dispositif d'entraînement du mandrin (13).

14. Tête de coupe selon la revendication 13, dans lequel le dispositif d'entraînement du mandrin comprend un organe d'entraînement par action manuelle.

15. Tête de coupe selon la revendication 13, **caractérisé en ce que** le dispositif d'entraînement du mandrin comprend un plot solidaire du mandrin, agencé à l'extérieur du corps (10) à l'encontre de la force de rappel d'un élément élastique (33), ledit plot étant mobile en coulissement selon l'axe (X) de rotation du mandrin entre une position où le mandrin est bloqué par rapport au corps et une position où le mandrin est mobile en rotation par rapport au corps.

16. Tête de coupe selon l'une des revendications 8 ou 9, **caractérisée en ce que** la section du mandrin (13) dans un plan perpendiculaire à son axe (X) de rotation a la forme du contour (C) d'une spirale (S), le segment radial (R) reliant les deux tours externes de ladite spirale correspondant à l'épaulement (130) pour l'extrémité interne du fil.

17. Tête de coupe selon l'une des revendications 1 à 16, **caractérisée en ce qu'**elle comprend un dispositif de blocage du fil à l'orifice de sortie.

18. Tête de coupe selon la revendication 17, **caractérisée en ce que** ledit dispositif de blocage comprend un ergot pivotable entre une position de libération du fil lorsque la tête de coupe est immobile et une position de blocage du fil sous l'effet de la force centrifuge lorsque la tête de coupe est entraînée en rotation par le moteur.

19. Tête de coupe selon l'une des revendications 1 à 18, **caractérisée en ce que** la tête (1) comprend en outre un couvercle (30) articulé sur le corps (10) par une charnière (31) pour fermer le logement (11) de la bobine.

20. Ensemble de coupe pour un appareil de coupe de végétaux, tel qu'un coupe-bordures ou une débroussailleuse, ledit ensemble comprenant une tête de coupe (1) selon l'une des revendications 1 à 19 et au moins une bobine autoporteuse (2) constituée d'une pluralité de spires (21) temporairement jointives d'au moins un fil (20) de coupe et présentant un évidement central (22).

21. Ensemble de coupe selon la revendication 20, **caractérisé en ce que** ladite bobine (2) est constituée d'une pluralité de spires temporairement jointives d'au moins deux fils de coupe liés longitudinalement de manière séparable.

22. Ensemble de coupe selon l'une des revendications 20 ou 21, **caractérisé en ce que** les spires de la bobine sont rendues temporairement jointives par des aménagements de retenue réciproque formés sur le fil, de sorte que chaque spire retienne mécaniquement une spire adjacente.

23. Ensemble de coupe selon l'une des revendications 20 ou 21, **caractérisé en ce que** les spires de la bobine (2) sont rendues temporairement jointives par adhésion.

24. Ensemble de coupe selon la revendication 23, **caractérisé en ce que** les spires sont rendues temporairement jointives par un adhésif rapporté.

25. Ensemble de coupe selon la revendication 23, **caractérisé en ce que** les spires sont rendues temporairement jointives par fusion contrôlée partielle de la matière du fil.

26. Ensemble de coupe selon l'une des revendications 20 à 25, **caractérisé en ce qu'**il comprend au moins deux bobines (2) empilées sur le mandrin (13).

## Patentansprüche

1. Schneidkopf (1) für ein Pflanzen-Schneidgerät, wie z. B. einen Rasenkantenschneider oder einen Gestrüppmäher, der geeignet ist, um wenigstens eine selbsttragende Spule (2) aufzunehmen, die aus einer Vielzahl von Wicklungen (21) gebildet ist, die temporär wenigstens mit einem Schneiddraht (20) verbunden sind und eine zentrale Ausnehmung (22) aufweisen, wobei die genannten Wicklungen miteinander fest verbunden sind, jedoch durch eine Zugkraft auf einem freien Ende des Drahtes trennbar sind, wobei der genannte Schneidkopf umfasst:
einen Körper (10), der eine interne Aufnahme (11) für die Spule (2) definiert und mit einer umlaufenden Öffnung (12) für den Ausgang einer von der Spule wieder getrennten Länge des Schneiddrahtes versehen ist und geeignet ist, in Rotation durch einen Motor angetrieben zu werden;
ein zentrales Spannfutter (13), das geeignet ist, um die genannte wenigstens eine selbsttragende Spule zu stützen,
wobei der genannte Schneidkopf **dadurch gekennzeichnet ist, dass** das genannte Spannfutter (13) wenigstens ein Element umfasst, das geeignet ist, um mit der Spule (2) derart zusammenzuwirken, dass eine feste Befestigung in Rotation zwischen dem Spannfutter (13) und der Spule (2) gewährleistet ist und dass das Spannfutter (13) geeignet ist, sich im Verhältnis zum Körper (10) selektiv zu drehen, um einen Abschnitt des Drahts (20) durch die umlaufende Öffnung (12) heraustreten zu lassen.

2. Schneidkopf gemäß Anspruch 1, **dadurch gekennzeichnet, dass** das genannte Element des Spannfutters (13), das geeignet ist, um mit der Spule zusammenzuwirken, eine Aufnahme (134) umfasst, um ein internes freies Ende (220) der Spule (2) zu halten.

3. Schneidkopf gemäß Anspruch 2, **dadurch gekennzeichnet, dass** die genannte Aufnahme (134) sich gemäß einem Durchmesser des Spannfutters (13) erstreckt.

4. Schneidkopf gemäß Anspruch 3, **dadurch gekennzeichnet, dass** die genannte Aufnahme (134) an ihren zwei Enden offen ist.

5. Schneidkopf gemäß Anspruch 1, **dadurch gekennzeichnet, dass** das genannte Element des Spannfutters (13), das geeignet ist, um mit der Spule zusammenzuwirken, eine umlaufende Oberfläche des mit Zähnen (135) versehenen Spannfutters derart ist, dass eine feste Befestigung per Reibung der Zähne mit der Spule (2) bereitgestellt wird.

6. Schneidkopf gemäß Anspruch 1, **dadurch gekennzeichnet, dass** das genannte Element des Spannfutters (13), das geeignet ist, um mit der Spule zusammenzuwirken, eine umlaufende Oberfläche (135') des Spannfutters ist, die mit einer Vielzahl von Rippungen (135") versehen ist, die derart in einem Konus eingefügt sind, dass eine feste Befestigung per Reibung der Rippungen mit der Spule (2) bereitgestellt ist.

7. Schneidkopf gemäß einem der Ansprüche 2 bis 6, **dadurch gekennzeichnet, dass** er darüber hinaus eine Trägerplatte (136) umfasst, die sich ausgehend von dem Spannfutter (13) radial erstreckt und fest an dem genannten Spannfutter und einer Druckplatte (35) befestigt ist, die der genannten Trägerplatte (136) gegenüber liegt und für einen Druck auf die genannte wenigstens eine Spule (2) geeignet ist, wenn die genannte Spule auf dem Spannfutter eingesetzt ist.

8. Schneidkopf gemäß Anspruch 1, **dadurch gekennzeichnet, dass** das genannte Element des Spannfutters (13), das geeignet ist, um mit der Spule (2) zusammenzuwirken, eine zu der zentralen Ausnehmung (22) der Spule komplementäre, nicht kreisförmige Form umfasst.

9. Schneidkopf gemäß Anspruch 8, **dadurch gekennzeichnet, dass** das Spannfutter (13) in der Umfangsrichtung einen Absatz (130) aufweist, der geeignet ist, sich gegen ein internes freies Ende (220) der Spule (2) zu stützen.

10. Schneidkopf gemäß einem der Ansprüche 1 bis 9, **dadurch gekennzeichnet, dass** die Aufnahme (11) geeignet ist, um eine Spule (2) aufzunehmen, die aus einer Vielzahl von Wicklungen (21) gebildet ist, die temporär wenigstens mit zwei Schneiddrähten (20a, 20b) verbunden sind, die in Längsrichtung trennbar verbunden sind und dass der Kopf (1) ebenso viele Ausgangsöffnungen (12a, 12b) wie Drähte (20a, 20b) umfasst.

11. Schneidkopf gemäß einem der Ansprüche 1 bis 9, **dadurch gekennzeichnet, dass** die Aufnahme (11) geeignet ist, um wenigstens zwei auf dem zentralen Spannfutter (13) gestapelte Spulen (2) aufzunehmen und dass der Kopf (1) ebenso viele Ausgangsöffnungen (12a, 12b) wie Drähte umfasst.

12. Schneidkopf gemäß einem der Ansprüche 10 oder 11, **dadurch gekennzeichnet, dass** die Ausgangsöffnungen (12a, 12b) der Drähte umfangsgemäß regelmäßig verteilt sind.

13. Schneidkopf gemäß einem der Ansprüche 1 bis 12, **dadurch gekennzeichnet, dass** er eine Antriebsvorrichtung des Spannfutters (13) umfasst.

14. Schneidkopf gemäß Anspruch 13, in dem die Antriebsvorrichtung des Spannfutters ein Antriebsorgan per manueller Betätigung umfasst.

15. Schneidkopf gemäß Anspruch 13, **dadurch gekennzeichnet, dass** die Antriebsvorrichtung des Spannfutters einen fest mit dem Spannfutter befestigten Stift umfasst, der an der Außenseite des Körpers (10) gegen die Rückholkraft eines elastischen Elements (33) angeordnet ist, wobei der genannte Stift gemäß der Rotationsachse (X) des Spannfutters zwischen einer Position, in der das Spannfutter im Verhältnis zum Körper blockiert ist, und einer Position, in der das Spannfutter im Verhältnis zum Körper mobil ist, gleitend mobil ist.

16. Schneidkopf gemäß einem der Ansprüche 8 oder 9, **dadurch gekennzeichnet, dass** der Abschnitt des Spannfutters (13), in dem eine zu seiner Rotationsachse (X) lotrechte Ebene die Form der Kontur (C) einer Spirale (S) hat, wobei das radiale Segment (R) die zwei externen Drehungen der genannten Spirale verbindet, das dem Absatz (130) für das interne Ende des Drahtes entspricht.

17. Schneidkopf gemäß einem der Ansprüche 1 bis 16, **dadurch gekennzeichnet, dass** er eine Blockiervorrichtung des Drahtes an der Ausgangsöffnung umfasst.

18. Schneidkopf gemäß Anspruch 17, **dadurch gekennzeichnet, dass** die genannte Blockiervorrichtung einen zwischen einer Freisetzungsposition des Drahtes, wenn der Schneidkopf unbeweglich ist, und einer Blockierposition des Drahtes unter der Wirkung der Zentrifuggalkraft, wenn der Schneidkopf in Rotation durch den Motor angetrieben wird, schwenkbaren Nocken umfasst.

19. Schneidkopf gemäß einem der Ansprüche 1 bis 18, **dadurch gekennzeichnet, dass** der Kopf (1) darüber hinaus einen Deckel (30) umfasst, der auf dem Körper (10) durch ein Scharnier (31) artikuliert ist, um die Aufnahme (11) der Spule zu schließen.

20. Schneidgruppe für ein Pflanzen-Schneidgerät, wie z. B. einen Rasenkantenschneider oder einen Gestrüppmäher, wobei die genannte Gruppe einen Schneidkopf (1) gemäß einem der Ansprüche 1 bis 19 und wenigstens eine selbsttragende Spule (2) umfasst, die aus einer Vielzahl von Wicklungen (21) gebildet ist, die temporär mit wenigstens einem Schneiddraht (20) verbunden sind und eine zentrale Ausnehmung (22) aufweisen.

21. Schneidgruppe gemäß Anspruch 20, **dadurch gekennzeichnet, dass** die genannte Spule (2) aus einer Vielzahl von Wicklungen gebildet ist, die temporär mit wenigstens zwei Schneiddrähten verbunden sind, die in Längsrichtung untrennbar verbunden sind.

22. Schneidgruppe gemäß einem der Ansprüche 20 oder 21, **dadurch gekennzeichnet, dass** die Wicklungen der Spule temporär durch gegenseitige Rückhalteeinrichtungen verbindend gemacht werden, die derart auf dem Draht gebildet sind, dass jede Wicklung eine anliegende Wicklung mechanisch zurückhält.

23. Schneidgruppe gemäß einem der Ansprüche 20 oder 21, **dadurch gekennzeichnet, dass** die Wicklungen der Spule (2) per Adhäsion temporär verbindend gemacht sind.

24. Schneidgruppe gemäß Anspruch 23, **dadurch gekennzeichnet, dass** die Wicklungen durch einen versetzten Haftstoff temporär verbindend gemacht sind.

25. Schneidgruppe gemäß Anspruch 23, **dadurch gekennzeichnet, dass** die Wicklungen per teilweiser, kontrollierter Fusion des Materials des Drahtes temporär verbindend gemacht werden.

26. Schneidgruppe gemäß einem der Ansprüche 20 bis 25, **dadurch gekennzeichnet, dass** sie wenigstens zwei auf dem Spannfutter (13) gestapelte Spulen (2) umfasst.

## Claims

1. A cutting head (1) for a vegetation cutting machine, such as a border trimmer or a brush cutter, designed to accommodate at least one self-supporting coil (2) consisting of a plurality of temporarily bonded turns (21) of at least one cutting filament (20) and exhibiting a central void (22), said turns being engaged with each other but separable by a tensile strain on one free end of the filament, said cutting head having:
a body (10) defining an inner recess (11) for the coil (2) and provided with a peripheral opening (12) for the emergence of a length of cutting filament separated from the coil, and capable of being driven in rotation by a motor,
a central mandrel (13) for supporting said at least one self-supporting coil,
said cutting head being **characterised in that** said mandrel (13) comprises at least one element adapted to cooperate with the coil (2) so as to ensure rotational engagement between the mandrel (13) and the coil (2), and **in that** the mandrel (13) is able to selectively rotate relative to the body (10) for emerging a filament portion (20) through the peripheral opening (12).

2. The cutting head according to Claim 1, **characterised in that** said element of the mandrel (13) adapted to cooperate with the coil comprises a housing (134) for holding an inner free end (220) of the coil (2).

3. The cutting head according to Claim 2, **characterised in that** said housing (134) extends along a diameter of the mandrel (13).

4. The cutting head according to Claim 3, **characterised in that** said housing (134) is opened at both ends.

5. The cutting head according to Claim 1, **characterised in that** said element of the mandrel (13) adapted to cooperate with the coil is a peripheral surface of the mandrel comprising serrations (135) so as to provide a frictional engagement of the serrations with the coil (2).

6. The cutting head according to Claim 1, **characterised in that** said element of the mandrel (13) adapted to cooperate with the coil is a peripheral surface (135') of the mandrel having a plurality of tapered ribs (135") so as to provide a frictional engagement of the ribs with the coil (2).

7. The cutting head according to one of Claims 2 to 6, **characterised in that** it further comprises a supporting plate (136) extending radially from the mandrel (13) and connected to said mandrel, and a pressuring plate (35) opposite to said supporting plate (136) and able to exert a pressure onto said at least one coil (2) when said coil is received on the mandrel.

8. The cutting head according to Claim 1, **characterised in that** said element of the mandrel (13) adapted to cooperate with the coil (2) comprises a non-circular shape that matches the central void (22) of the coil.

9. The cutting head according to Claim 8, **characterised in that** the mandrel (13) exhibits in the circumferential direction a shoulder (130), capable of abutting an inner free end (220) of the coil (2).

10. The cutting head according to one of Claims 1 through 9, **characterised in that** the recess (11) is designed to accommodate a coil (2) consisting of a plurality of temporarily bonded turns (21) of at least two cutting filaments (20a, 20b) longitudinally bonded in a separable manner, and **in that** the head (1) has as many exit openings (12a, 12b) as filaments (20a, 20b).

11. The cutting head according to one of Claims 1 through 9, **characterised in that** the recess (11) is designed to accommodate at least two coils (2) stacked on the central mandrel (13) and **in that** the head (1) has as many exit openings (12a, 12b) as filaments.

12. The cutting head according to one of Claims 10 and 11, **characterised in that** the exit openings (12a, 12b) of the filaments are regularly distributed circumferentially.

13. The cutting head according to one of Claims 1 through 12, **characterised in that** it includes a device for driving the mandrel (13).

14. The cutting head according to Claim 13, wherein the driving device for the mandrel includes a manual driving member.

15. The cutting head according to Claim 13, **characterised in that** the mandrel driving device includes a bumper attached to the mandrel, positioned on the outside of the body (10) resisting the return force of an elastic element (33), said bumper being movable by sliding along the axis of rotation (X) of the mandrel between a position wherein the mandrel is locked with respect to the body and a position wherein the mandrel is movable in rotation with respect to the body.

16. The cutting head according to one of Claims 8 and 9, **characterised in that** the cross-section of the mandrel (13) in a plane perpendicular to its axis of rotation (X) has the shape of a contour (C) of a spiral (S), the radial segment (R) connecting the two outer turns of said spiral corresponding to the shoulder (130) for the inner end of the filament.

17. The cutting head according to one of Claims 1 through 16, **characterised in that** it includes a device for locking the filament at the exit opening.

18. The cutting head according to Claim 17, **characterised in that** said locking device includes a stud pivoting between a position freeing the filament when the cutting head is stopped and a position locking the filament under the influence of the centrifugal force when the cutting head is driven in rotation by the motor.

19. The cutting head according to one of Claims 1 through 18, **characterised in that** the head (1) also has a cover (30) connected to the body (10) by a hinge (31) to close the recess (11) of the coil.

20. A cutting assembly for a vegetation cutting machine, such as a border trimmer or a brush cutter, said assembly including a cutting head (1) according to one of Claims 1 through 19 and at least one self-supporting coil (2) consisting of a plurality of temporarily bonded turns (21) of at least one cutting filament and exhibiting a central void (22) .

21. The cutting assembly according to Claim 20, **characterised in that** said coil (2) consists of a plurality of temporarily bonded turns of at least two cutting filaments bonded longitudinally in a separable fashion.

22. The cutting assembly according to one of Claims 20 and 21, **characterised in that** the turns of the coil are temporarily bonded by reciprocal retention arrangements formed on the filament, such that each turn mechanically retains one adjacent turn.

23. The cutting assembly according to one of Claims 20 and 21, **characterised in that** the turns of the coil (2) are temporarily bonded by adhesion.

24. The cutting assembly according to Claim 23, **characterised in that** the turns are temporarily bonded by an applied adhesive.

25. The cutting assembly according to Claim 23, **characterised in that** the turns are temporarily bonded by controlled partial fusion of the material of the filament.

26. The cutting assembly according to one of Claims 20 through 25, **characterised in that** it includes at least two coils (2) stacked on the mandrel (13).
